# EUROPEAN PATENT SPECIFICATION

(11) **EP 1 155 766 B1**
(45) Date of publication and mention of the grant of the patent: **13.10.2004**
(21) Application number: 01105883.1
(22) Date of filing: 09.03.2001
(51) Int. Cl.: B23D 15/02, B21D 43/28

(54) **Cutting apparatus for welding machine**
Schneidvorrichtung
Appareil de coupage

(30) Priority: 17.05.2000 JP 2000145230
(43) Date of publication of application: 21.11.2001
(60) Divisional application: 03026616.7
(73) Proprietor: MITSUBISHI DENKI KABUSHIKI KAISHA, Tokyo 100-8310 (JP)
(72) Inventor: Miyata, Junji, Chiyoda-ku, Tokyo 100-8310 (JP); Nakatani, Nobuyoshi, Tokyo 100-0004 (JP)
(74) Representative: Popp, Eugen, Dr.

(56) References cited:
- DE-A- 3 303 540
- DE-C- 254 376
- GB-A- 227 814
- GB-A- 763 163
- US-A- 2 753 937

## Description

### BACKGROUND OF THE INVENTION

### 1. Field of the Invention

The present invention relates to a cutting apparatus for a welding machine, provided with a pair of upper and lower blade portions facing each other, an upper blade portion ascending/descending link means for moving the upper blade portion up and down to the lower blade portion, a plurality of ascending/descending guide means for guiding abutment between the upper and lower blade portions and an ascending/descending drive means for ascending and descending the upper blade portion through the upper blade ascending/descending link means, and for example, to a cutting apparatus for a seam welding machine for bonding a tail end portion of a leading plate and a tip end portion of a trailing plate in a process line of metal plates.

### 2. The Related Art

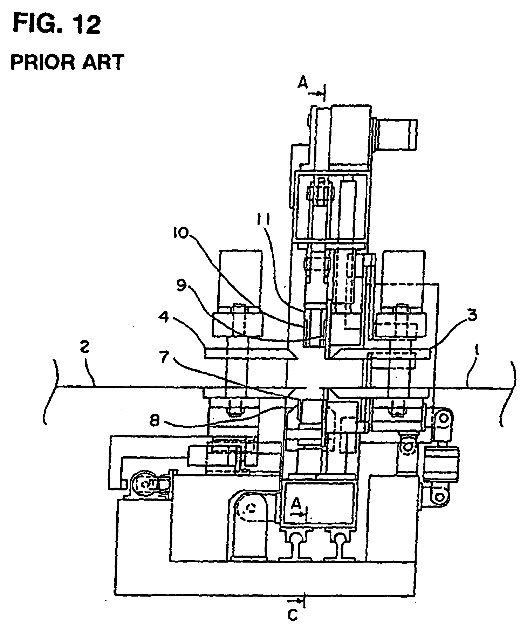

The conventional technology will now be described with reference to Figs. 12 to 14.

Figs. 12 to 14 schematically show a cutting apparatus for a mushroom welding machine used in a process line of metal plates disclosed in Japanese Examined Utility Model Publication No. Sho 62-39902, further including a current structure for showing details.

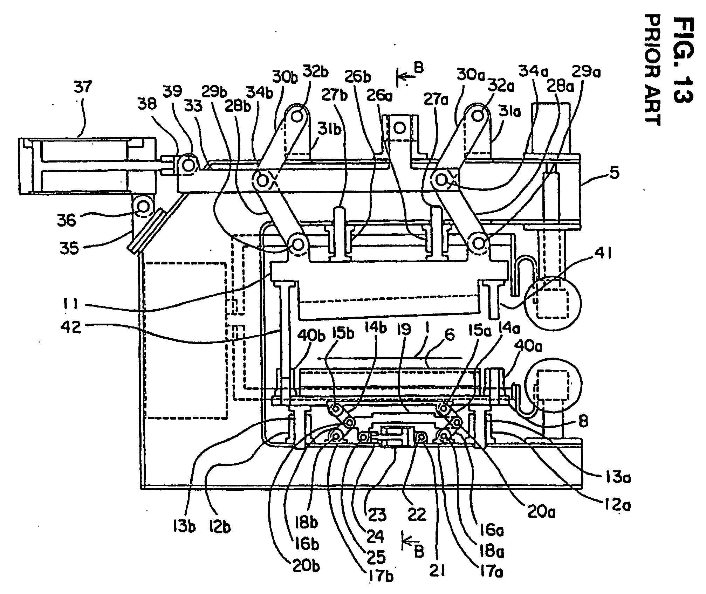

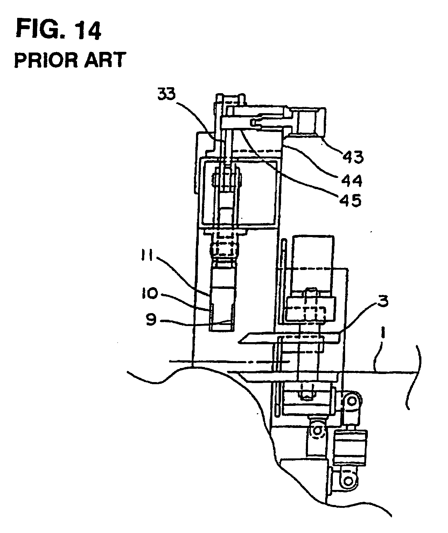

Fig. 12 is a frontal view, Fig. 13 is a cross-sectional view taken along the line A-A of Fig. 12 and Fig. 14 is a cross-sectional view taken along the line B-B of Fig. 13.

In the cutting apparatus for a welding machine shown in Figs. 12 to 14, first of all, a tail end portion of a leading plate 1 and a tip end portion of a trailing plate 2 are stopped within a mushroom welding machine, and thereafter, are fixed by leading plate clamps 3 and trailing plate clamps 4.

After the f ixation, a lower blade holder 8 ( hereinafter also referred to as lower blade portion) on which mounted are a leading plate cutting lower blade 6 and a trailing plate cutting lower blade 7 is raised within a carriage C frame 5 as an apparatus frame shown in Fig. 13, and at the same time, an upper blade holder 11 (hereinafter also referred to as upper blade portion) on which mounted are a leading plate cutting upper blade 9 and a trailing plate cutting upper blade 10 is lowered within the frame, so that the tail end portion of the above-described leading plate 1 and the tip end portion of the trailing plate 2 are cut in parallel prior to the welding operation.

When the cutting operation has been carried out, the lower holder (lower blade portion) 8 is lowered, and at the same time, the upper holder (upper blade portion) 11 is raised so that a double cut shear that has cut the tail end of the leading plate 1 and the tip end of the trailing plate 2 is returned back to the original position. After that, other devices within the welding machine take further steps for welding.

The above-described lower blade portion designates a portion including the leading plate cutting lower blade 6, the trailing plate cutting lower blade 7 and the lower holder 8, and the above-described upper blade portion designates a portion including the leading plate cutting upper blade 9, the trailing plate cutting upper blade 10 and the upper holder 11.

In Fig. 13, on the lower blade portion side, the lower blade holder 8 of the lower blade portion is guided by a guide bearing 12a and a guide bearing 12b mounted on the carriage C frame 5 as the apparatus frame and the ascending/descending guide means is composed mainly of a guide shaft 13a and a guide shaft 13b so as to be movable in the vertical direction.

The lower blade ascending/descending link means will now be described.

First of all, on the lower blade portion side, one side of a link 14a is coupled rotatably with a shaft 15a mounted on a lower side of one end side of the lower holder 8, whereas one side of the other link 14b is coupled rotatably with a shaft 15b mounted on a lower side of the other end side of the lower holder 8.

Also, one end side of a link 16a is coupled rotatably with a shaft 18a fitted in a bracket 17a mounted on the lower side of the carriage C frame 5, whereas one end side of the other link 16b is coupled rotatably with a shaft 18b fitted in a bracket 17b mounted on the lower side of the carriage C frame 5.

Also, the link 14a and the link 16a are coupled rotatably with one shaft 20a of shaft 20a and shaft 20b provided on both sides of a link 19, whereas the link 14b and the link 16b are coupled rotatably on the other shaft 20b to form a parallel link mechanism.

The ascending/descending drive means on the lower blade portion side will now be described.

A crevice type cylinder 23 is used as the ascending/descending drive means on the lower blade portion side. A crevice portion of the crevice type cylinder 23 is coupled rotatably with a shaft 22 engaged with a bracket 21 mounted on the carriage C frame 5 as the apparatus frame.

This crevice type cylinder 23 is coupled with the link 19, constituting the lower blade portion ascending and descending means, through a tip end metal member 24 mounted at the tip end of a piston rod thereof and a shaft 25 engaged with this tip end metal member 24.

The upper blade portion side ascending/descending guide means will now be described.

On the upper blade portion side, a guide shaft 27a and a guide shaft 27b are arranged so that the upper blade holder 11 is guided by a guide bearing 26a and a guide bearing 26b mounted on the carriage C frame 5 as the apparatus frame so as to be movable vertically.

The upper blade portion ascending/descending means will now be described.

On the upper blade portion side, one side of a link 28a is coupled rotatably with a shaft 29a mounted on an upper side of one end side of the upper holder 11, whereas one side of the other link 28b is coupled rotatably with a shaft 29b mounted on an upper side of the other end side of the upper holder 11.

Also, one end side of a link 30a is coupled rotatably with a shaft 32a fitted in a bracket 31a mounted on the upper side of the carriage C frame 5, whereas one end side of the other link 30b is coupled rotatably with a shaft 32b fitted in a bracket 31b mounted on the upper side of the carriage C frame 5.

Also, shafts 34a and 34b are provided on a link 33. The link 28a and the link 30a are coupled rotatably with the shaft 34a,whereas the link 28b and a link 30b are coupled rotatably on the other shaft 34b to form a parallel link mechanism.

The ascending/descending drive means on the upper blade portion side will now be described.

A trunnion type cylinder 37 is used as the ascending/descending drive means on the upper blade portion side. A trunnion portion of the trunnion type cylinder 37 is coupled rotatably with a shaft 36 engaged with a bracket 35 mounted on the carriage C frame 5. This trunnion type cylinder 37 is coupled with a link 33, constituting the upper and lower blade portion link mechanism, through a tip end metal member 38 mounted at the tip end of a piston rod of the trunnion type cylinder 37 and a shaft 39 engaged with this tip end member 38.

The ascending/descending guide means for holding a clearance between the upper and lower blade portions will now be described.

In the above-described conventional apparatus, a guide bearing 40a and a guide bearing 40b are provided in order to maintain the respective clearances between the leading plate cutting lower blade 6 and the leading plate cutting upper blade 9 and between the trailing plate cutting lower blade 7 and the trailing plate cutting upper blade 10 during the cutting operation as well as upon the cutting operation. Guide shafts 41 and 42 that may be movable in the vertical direction are provided while being guided by these guide bearings 40a and 40b. One of the guide shafts 41 is provided on the lower side of one end side of the upper blade holder 11 and the other guide shaft 42 is provided on the lower side of the other end side of the upper blade holder 11, respectively.

By the way, in the above-described conventional apparatus, since the trunnion type cylinder 37 is used as the ascending/descending means for moving the upper blade portion up and down, in the case where the upper blade holder (upper blade portion) 11 is to be moved up and down by feeding compressed air to this trunnion type cylinder 37, the density of the used fluid is small. Accordingly, although the upper blade holder 11 should be stopped at the top dead point and held in that position, there is a fear that the upper blade portion would be lowered unintentionally due to the leakage from the piston portion or the piston rod portion of the interior of the trunnion type cylinder 37 or the piping system or the like.

As shown in Fig. 14, in order to prevent this lowering movement, a safety lock mechanism is provided with a structure in which a pin 45 mounted at a tip end of the piston rod of a cylinder 43 slidingly moving within a bracket 44 is normally inserted into a hole provided in the link 33 constituting the above-described upper blade portion ascending/descending means, and for example, if necessary (as desired), when the upper blade holder (upper blade portion) 11 is to be lowered to perform the cutting operation, the above-described cylinder 43 is operated to pull the pin 45 apart from the hole of the link 33.

As described above, in the conventional cutting apparatus for a welding machine, two guide units as the ascending/descending guide means guided by the guide bearings 12a and 12b and composed of the guide shafts 13a and 13b formed so as to be movable in the vertical direction and two guide units as the ascending/descending guide means guided by the guide bearings 26a and 26b and composed of the guide shafts 27a and 27b formed so as to be movable in the vertical direction are used when the lower holder (lower blade portion) 8 is moved up and down and when the upper blade holder (upper blade portion) 11 are moved up and down, respectively.

In addition, as the ascending/descending guide means for maintaining the clearance for maintaining and holding the clearance of the cutting blades, the guide bearings 40a and 40b are provided between the lower holder (lower blade portion) 8 and the upper holder (upper blade portion) 11 and the two guide units composed of guide shafts 41 and 42 formed so as to be guided by these bearings and movable in the vertical direction are provided.

Thus, in such a conventional apparatus, since an excessive number of guide units are used as the ascending/descending guide means between the lower blade holder (lower blade portion) 8 and the upper blade holder (upper blade portion) 11, the structure of the cutting apparatus for a welding machine, i.e., the cutting apparatus for the mushroom welding machine for metal plates in this case becomes complicated and expensive in manufacture cost.

Also, in the case where a pneumatic system is used, for example, compressed air is fed to operate the trunnion type cylinder 37 as the ascending/descending drive source for ascending/descending the upper blade holder (upper blade portion) 11, there is a problem in that the holder could not be stopped immediately by the compression property of air when the upper blade holder 11 is to be stopped in emergency due to some reason on the way of the ascending/descending operation thereof.

Also, in a manufacturing process of a welding machine, an exchange work for parts for maintenance or the like, in the case where the cutting lower blade and the cutting upper blade are assembled and the clearance of the assembly thereof is adjusted or confirmed, it is impossible to stop immediately the blades at a desired position due to the compression property of air or it is also impossible to perform an inching operation or the like. For this reason, there is a problem that it takes a large amount of labor for the adjustment or confirmation of the clearance.

US Patent 2,753,937 relates to a lever-operated shears and in particular to a metal shear having a housing of substantial regular sections of substantial uniform thickness which is almost entirely relieved of stresses during the shearing operation This document forms the basis for the preamble of claim 1 or 2.

### SUMMARY OF THE INVENTION

In order to overcome the above-noted defects, an object of the present invention is to provide a cutting apparatus for a welding machine, which is simple in structure and superior in operationability.

According to a first claim of the present invention, there is provided a cutting apparatus for a welding machine, comprising a pair of upper and lower blade portions facing to each other, an upper blade portion ascending/descending link means for moving the upper blade portion up and down to the lower blade portion, a plurality of ascending/descending guide means for guiding abutment between the upper and lower blade portions, an ascending/descending drive means for ascending/descending the upper blade portion through the upper blade portion ascending/descending link means, wherein at least one of each of the upper blade portion ascending/descending guide means, the lower blade portion ascending/descending guide means and the ascending/descending guide means for holding a clearance between the upper and lower blade portions is used in common as a co-use ascending/descending means out of the plurality of ascending/descending guide means, characterized in that the apparatus comprises a hydraulic drive means normally depending upon the operation of said upper blade portion ascending/descending an additional link means and working as an additional drive source for said upper blade portion ascending/descending link means when necessary, in conjunction with said upper blade portion ascending/descending link means.

According to a second claim of the present invention, there is provided a cutting apparatus for a welding machine, comprising a pair of upper and lower blade portions facing to each other, an upper blade portion ascending/descending link means for moving the upper blade portion up and down to the lower blade portion, a plurality of ascending/descending guide means for guiding abutment between the upper and lower blade portions, an ascending/descending drive means for ascending/descending the upper blade portion through the upper blade portion ascending/descending link means, wherein at least one of each of the upper blade portion ascending/descending guide means, the lower blade portion ascending/descending guide means and the ascending/descending guide means for holding a clearance between the upper and lower blade portions is used in common as a co-use ascending/descending means out of the plurality of ascending/descending guide means, characterized in that the apparatus comprises a hydraulic drive means normally depending upon the operation of said upper blade portion ascending/descending link means and working as an additional drive source for said upper blade portion ascending/descending on additional link means when necessary, in conjunction with said upper blade portion.

According to a third claim of the present invention, the cutting apparatus for a welding machine according to claim 1 is characterized in that the co-use ascending/descending guide means engages end portions of the upper and lower blade portions movably up and down with a guide shaft provided in an apparatus frame so as to extend in parallel with an abutment direction of the upper and lower blade portions.

According to a fourth claim of the present invention, the cutting apparatus for a welding machine according to claim 2 or 3 is characterized in that at least one ascending/descending guide means other than the co-use ascending/descending guide means is provided with guide hydraulic drive means, and a piston rod of a hydraulic cylinder as the guide hydraulic drive means is used as a guide shaft

According to a fifth claim of the present invention, the cutting apparatus for a welding machine according to claim 1 is characterized in that the hydraulic drive means is a hydraulic swing motor, and an output shaft of the swing motor is coupled detachably to the upper blade portion ascending/descending link means.

According to a sixth claim of the present invention, the cutting apparatus for a welding machine according to claim 5 is characterized in that the hydraulic swing motor is provided with a solenoid valve for opening/closing a hydraulic circuit of the swing motor so as to operate or stop the swing motor.

### BRIEF DESCRIPTION OF THE DRAWINGS

In the accompanying drawings:

Fig. 1 is a frontal view of a cutting apparatus for a welding machine according to a first embodiment of the present invention;

Fig. 2 is a cross-sectional view taken along the line C-C of Fig. 1;

Fig. 3 is a cross-sectional view taken along the line D-D of Fig. 2;

Fig. 4 is a cross-sectional view of a second embodiment of the present invention corresponding to Fig. 2;

Fig. 5 is a frontal view of a cutting apparatus for a welding machine according to the second embodiment of the present invention;

Fig. 6 is a cross-sectional view taken along the line E-E of Fig. 5;

Fig. 7 is a cross-sectional view taken along the line F-F of Fig. 6;

Fig. 8 is a cross-sectional view taken along the line G-G of Fig. 7;

Fig. 9 is a cross-sectional view of a fourth embodiment of the present invention corresponding to Fig. 2;

Fig. 10 is a cross-sectional view of a fifth embodiment of the present invention corresponding to Fig. 2;

Fig. 11 is a cross-sectional view of a sixth embodiment of the pres4ent invention corresponding to Fig. 2;

Fig. 12 is a frontal view showing a conventional cutting apparatus for a welding machine;

Fig. 13 is a view taken along the line A-A of Fig. 12;and Fig. 14 is a view taken along the line B-B of Fig. 13.

### DETAILED DESCRIPTION OF THE PREFERRED EMBODIMENTS

### Embodiment 1

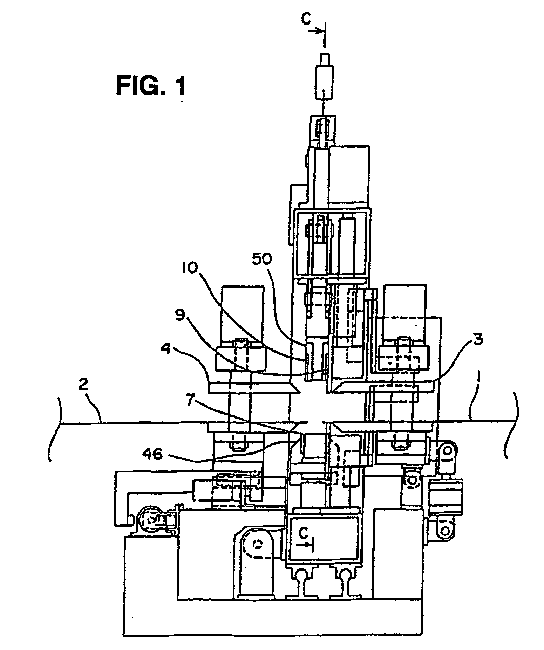

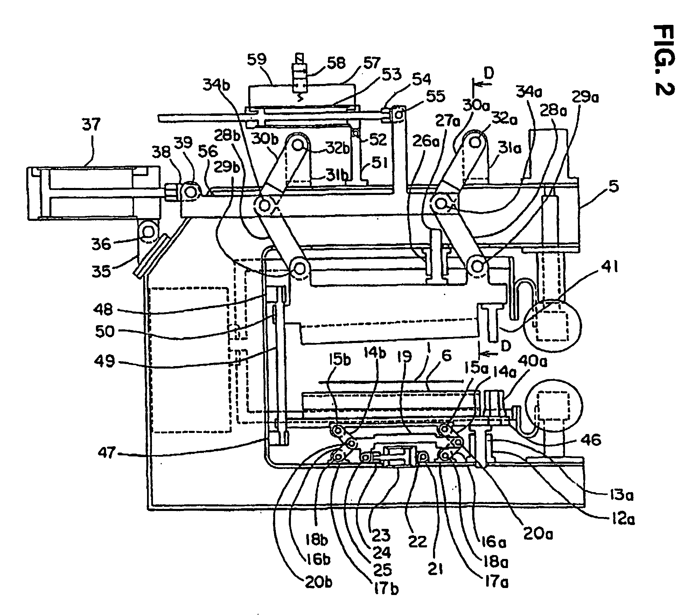

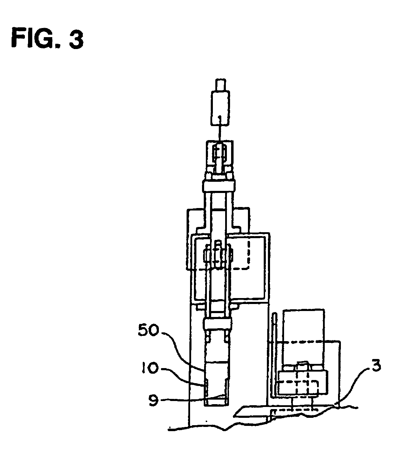

A cutting apparatus for a seam welding machine in accordance with a first embodiment of the present invention will now be described with reference to Figs. 1, 2 and 3. Fig. 1 is a frontal view, Fig. 2 is a cross-sectional view taken along the line C-C of Fig.1 and Fig. 3 is a cross-sectional view taken along the line D-D of Fig. 2. Incidentally, in Figs. 1, 2 and 3, the same reference numerals are used to indicate the components or members having the same function and structure in Figs. 12 to 14, and explanation therefor will be omitted.

An ascending/descending means for guiding abutment between an upper blade and a lower blade will now be described with reference to Figs. 1 and 2.

First of all, on the side of the lower blade portion, a guide unit as the ascending/descending guide means composed of a guide bearing 12a mounted on a carriage C frame 5 as the apparatus frame and a guide shaft 13a guided by the guide bearing 12a for guiding one end of the lower blade holder 46 movably in the vertical direction is provided at one end side of the lower blade holder 46 as the lower blade portion.

Also, another guide unit as the ascending/descending guide means for the lower blade holder 46, i.e., the ascending/descending means is provided on the other end side of the above-described lower holder 46.

This guide unit is a co-use ascending/descending means and is composed of a bracket 47 and a bracket 48 mounted on the carriage C frame 5 and a guide shaft 49 fixed in the vertical direction by the bracket 47 and the bracket 48. The end portion of the other end side of the lower blade holder 46 is guided by the guide shaft 49 of this co-use ascending/descending guide means and engaged movably in the vertical direction.

On the other hand, on the side of the upper blade portion, a guide unit as the ascending/descending guide unit composed of a guide bearing 26a mounted on the carriage C frame 5 as the apparatus frame and a guide shaft 27a guided by the guide bearing 26a for guiding one end of an upper blade holder 50 movably in the vertical direction is provided at one end side of the upper blade holder 50 as the upper blade portion.

Also, on the other end side of the above-described upper blade holder 50, the upper blade portion is guided by the guide shaft 49 of the above-described co-use ascending/descending guide means mounted on the carriage C frame 5 and is movable in the vertical direction.

Namely, the other end portion of the upper blade holder 50 uses the co-use ascending/descending guide means in common for the above-described lower blade holder 46.

A clearance holding means of the upper and lower blade portion will now be described.

This clearance holding means is the ascending/descending guide means provided with a structure for maintaining and holding the respective clearance between a leading plate cutting lower blade 6 and a leading plate cutting upper blade 9 and between a trailing plate cutting lower blade 7 and the trailing plate cutting upper blade 10 upon the cutting operation.

In the example shown, the guide shaft 40a is provided upwardly on the upper side of one end of the lower blade holder 46 as the lower blade portion and the guide shaft 41 is provided downwardly on the lower side of the one end side of the upper blade holder 50 to be guided by the guide bearing 40a and movable in the vertical direction.

An ascending/descending drive means for ascending/descending the upper blade portion through the above-described upper blade portion ascending/descending link means will now be described.

In this first embodiment, a trunnion type cylinder 37 is used as the ascending/descending drive means. Compressed air is fed to this trunnion type cylinder 37 to move up and down the upper blade holder 50 as the upper blade portion.

A hydraulic drive means as a drive source for the upper blade ascending/descending link means when necessary and normally depending upon the operation of the upper blade ascending/descending link means will now be described in conjunction with the upper blade ascending/descending link means constituting the ascending/descending means.

In this hydraulic drive means, a trunnion portion of a hydraulic trunnion type cylinder 53 is coupled rotatably with a shaft 52 fitted in a bracket 51 mounted on the top surface side of the carriage C frame 5 as the apparatus frame, and at the same time, a link 56 constituting the upper blade portion ascending/descending link means is coupled rotatably with a tip end member made by metal 54 mounted at a tip end of a piston rod of the above-described hydraulic trunnion type cylinder 53 and a shaft 55 fitted in the tip end member made by metal 54.

A control of this hydraulic drive means will now be described.

A pipe 57 is connected to one piping port of a hydraulic "opening and closing" solenoid valve (hereinafter also referred to as opening/closing valve) from one piping port of the hydraulic trunnion type cylinder 53 as the hydraulic drive means, and a pipe 59 is connected to the other piping port of the opening/closing valve 58 from the other piping port of the hydraulic trunnion type cylinder 53, respectively, to form a hydraulic circuit.

Of course, hydraulic working oil is filled in these hydraulic trunnion type cylinder 53, pipe 57, opening/closing valve 58 and pipe 59.

Incidentally, in the case where the compressed air is fed to the above-described trunnion type cylinder 37 to perform the up-and-down movement of the upper blade holder, it is possible to use the following arrangement. Two feed ports are coupled with each other by a pipe. The fixed 6bject is connected to a hydraulic cylinder provided with a hydraulic opening and closing solenoid valve in the midway of the pipe, an object for the up-and-down movement of the hydraulic swing motor, an object depending upon the up-and-down movement or a rotary shaft of the link mechanism. By utilizing non-compression property of the oil, the objects are stopped immediately during the up-and-down movement of the upper blade holder by the closing operation of the solenoid valve to hold the position.

In this first embodiment, since an upper holder 11 as the upper blade portion may be held and moved up and down by the two ascending/descending means of the guide shaft 49 and the guide bearing 26a, it is possible to reduce the number of the guide units as the ascending/descending means by one. It is easy to perform the maintenance and confirmation work in comparison with the conventional work for adjusting the three guide units as the ascending/descending means.

Also, the hydraulic drive means is provided additionally to the link 56 constituting the upper blade portion ascending/descending link means of the ascending/descending means to form the hydraulic circuit as a control circuit composed of the hydraulic trunnion type cylinder 53 as the above-described hydraulic drive means, its pipe 59, the opening/closing valve (solenoid valve) 58 and the like. Accordingly, for instance, even if the self-holding function is eliminated due to the absence of the pneumatic pressure, it is possible to maintain the up-and-down operation by the above-described hydraulic drive means composed of the hydraulic trunnion type cylinder 53 and the opening/closing valve 58, and in addition, it is possible to stop the operation of the upper holder 11 as the upper blade portion. Accordingly, it is possible to provide circumstances that are very effective for the maintenance and adjustment work.

### Embodiment 2

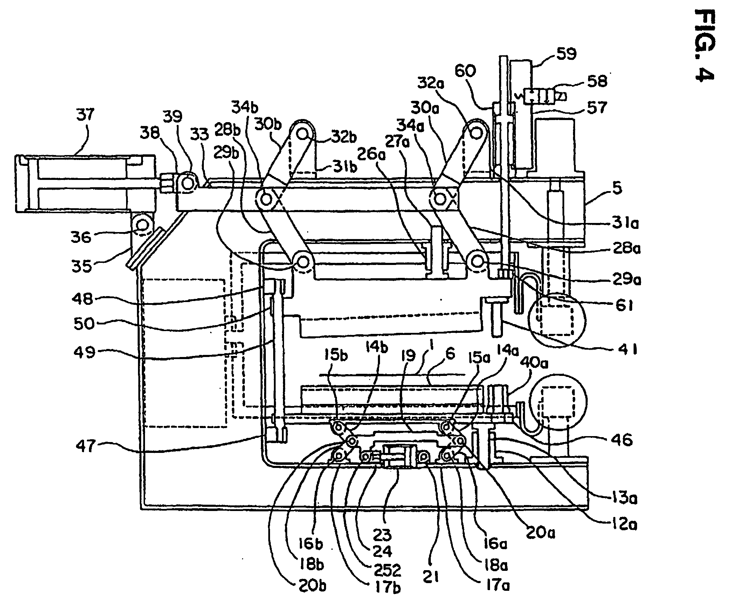

A second embodiment will now be described with reference to Fig. 4. In this second embodiment, while modifying the foregoing embodiment, in conjunction with the upper blade portion ascending/descending link means, a hydraulic foot cylinder 60 as hydraulic drive means to work normally to depend upon the operation of the above-described ascending/descending link means and to work as a drive source of the upper blade ascending/descending link means when necessary is used instead of the hydraulic trunnion type cylinder 53. A tip end of a piston rod of the hydraulic trunnion type cylinder 53 is directly coupled with the upper blade holder 50 as the upper blade.

The hydraulic circuit for controlling this hydraulic drive means is constructed in the same manner as in the first embodiment with the like operation and the like effect.

Namely, the upper blade holder 50 may be held by the small number of the ascending/descending means by one in comparison with the conventional case. Even if the cylinder 37 as the ascending/descending drive means for moving the upper blade portion up and down is of a pneumatic type and the pneumatic pressure is eliminated due to the stop of electric supply or the like, the upper blade holder 50 is held in its position in the same manner as in the first embodiment by the hydraulic circuit constituted by the hydraulic cylinder 60 to thereby perform the more safety maintenance and adjustment work.

### Embodiment 3

In a third embodiment, while modifying the first and second embodiments, it is possible to perform the self-holding function, that is, to hold the upper blade portion in any desired position by stopping the operation of the ascending/descending link means by using the hydraulic swing motor as the hydraulic drive means to work as the ascending/descending drive source of the upper blade portion when necessary and to work normally to depend on the operation of the upper blade portion in conjunction with the upper blade portion.

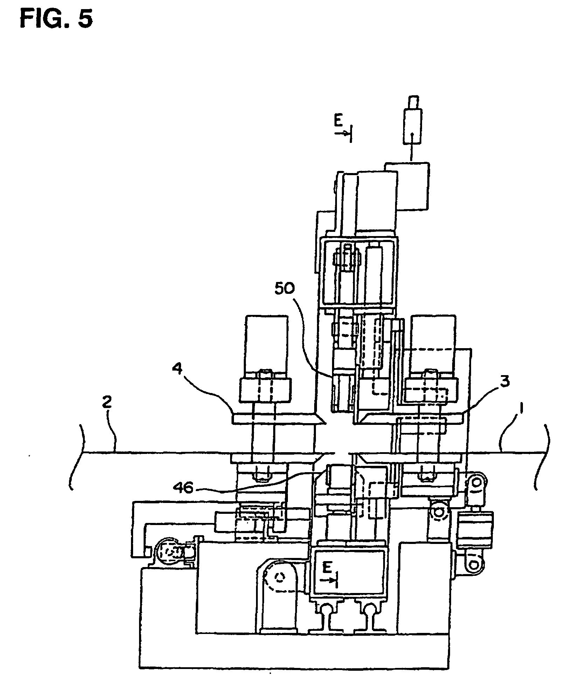

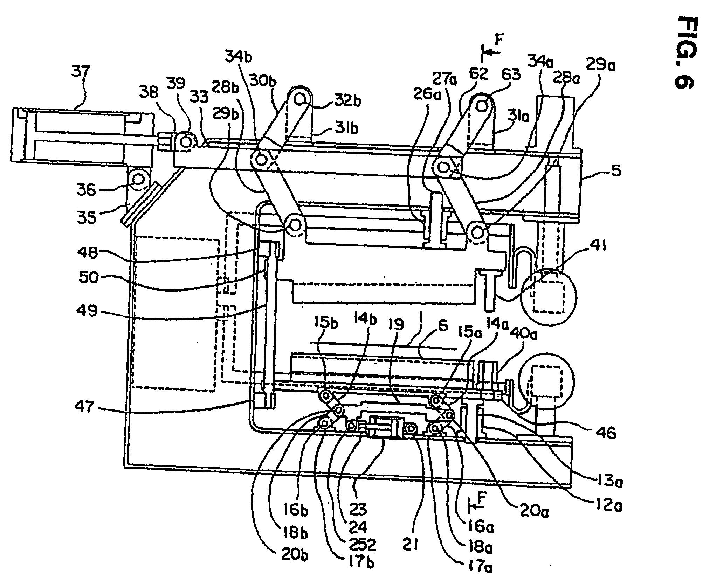

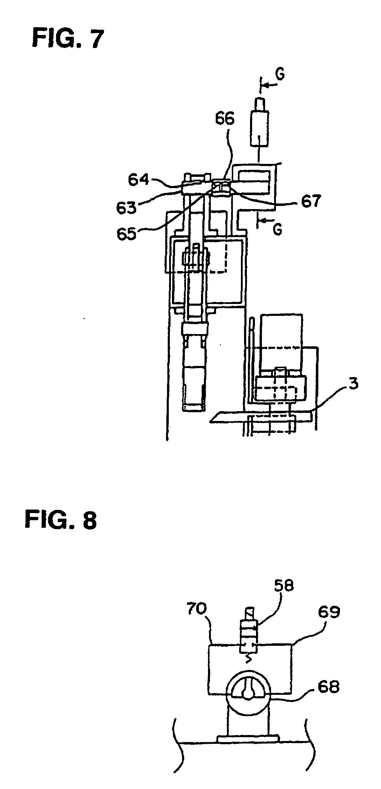

The third embodiment will now be explained with reference to Figs. 5 to 8. Fig. 5 is a frontal view, Fig. 6 is a cross-sectional view taken along the line E-E of Fig. 5, Fig. 7 is a cross-sectional view taken along the line F-F of Fig. 6, and Fig. 8 is a cross-sectional view taken along the line G-G of Fig. 7.

Incidentally, in Figs. 5 to 8, the same reference numerals are used to indicate the same components or members as those in the first to third embodiments (Figs. 1 to 7). Accordingly, the explanation therefor will be omitted.

First of all, an ascending/descending guide means will be described.

In the case where compressed air is fed to a trunnion type cylinder 37 as an ascending/descending drive means and the upper blade holder 50 as the upper blade portion is moved up and down, the one end side of the upper blade holder 50 is guided by the ascending/descending guide means composed of a guide bearing 26a mounted on the carriage C frame 5 as the apparatus frame and a guide shaft 27a provided movably in the vertical direction and guided by this guide bearing 26a.

On the other hand, the other end side of the upper blade holder 50 is used in common as the co-use ascending/descending guide means as the ascending/descending guide means for the lower blade holder 46 as the lower blade portion.

Namely, the upper blade holder 50 is fitted to the guide shaft 49 fixed by the bracket 47 and the bracket 48 mounted on the above-described carriage C frame 5 and is guided by the guide shaft 49 movably in the vertical direction in the same manner as in Figs. 4 to 6. This co-use ascending/descending guide means has the same structure as that of the foregoing embodiments.

An ascending/descending link means will now be described.

One end side of a link 28a constituting the upper blade ascending/descending link means of the ascending/descending link means is coupled rotatably with a shaft 29a fitted on the upper side of one end side of the upper holder 50 as the upper blade portion, whereas the other end side of a link 28b is coupled rotatably with a shaft 29b fitted on the upper side of the other end side of the upper blade holder 50.

Also, one end side of a link 62 constituting the upper blade portion ascending/descending link is coupled with a shaft 63 engaged with a bracket 31a mounted on the upper side of the carriage C frame 5 as the apparatus frame so as to make it possible to transmit the torque through a key 64.

In the same manner, one end side of a link 30b constituting the upper blade portion ascending/descending link is coupled rotatably with a shaft 32b engaged with a bracket 31b mounted on the upper side of the carriage C frame 5.

An ascending/descending drive means for moving the upper blade portion up and down will now be described.

A shaft 34a and a shaft 34b are provided to a link 33 constituting the upper blade portion ascending/descending link, and the link 63 and the link 30a are coupled rotatably with the shaft 34a and the link 28b and the link 30b are coupled rotatably with the shaft 34b to form the parallel link mechanism

Also, in this link 33, a trunnion portion of the trunnion type cylinder 37 is coupled rotatably with a shaft 36 engaged with a bracket 35 mounted on the carriage C frame 5 as the apparatus frame, through a tip end member 38 mounted at the tip end of a piston rod of the trunnion type cylinder 37 and a shaft 39 engaged with this tip end member 38.

Thus, the upper blade ascending/descending link constituting the ascending/descending link means is driven by the trunnion type cylinder 37 as the ascending/descending drive means so that the upper blade portion is raised to the lower blade portion.

A hydraulic drive means as a drive source for the upper blade ascending/descending link means when necessary and normally depending upon the operation of the upper blade ascending/descending link means will now be described in conjunction with the upper blade ascending/descending link means. In this third embodiment, the hydraulic swing motor is used as the hydraulic drive means.

In Fig. 7, the hydraulic swing motor 68 is provided on the carriage C frame 5 as the apparatus frame and constructed so that its output shaft transmits the torque through the key 67, the shaft joint 66 and the key 65 to the shaft 63 (Fig. 6) of the link 62 of the upper blade portion ascending/descending link means constituting the ascending/descending link means.

Control of this hydraulic swing motor 68 will now be described.

In Fig. 8, a pipe 69 is connected to one piping port of a hydraulic "opening and closing" solenoid valve 58 as an opening/closing valve from one piping port of the hydraulic swing motor 68, and a pipe 70 is connected to the other piping port of the hydraulic opening/closing solenoid valve 58 from the other piping port of the hydraulic swing motor 68, respectively, to form a hydraulic circuit as the control circuit.

Of course, the hydraulic working oil is filled in the hydraulic swing motor 68, pipe 69, hydraulic opening/closing solenoid valve 58 and pipe 70.

In accordance with the third embodiment, even if the cylinder 37 as the ascending/descending means is of a pneumatic type and it is difficult to maintain the self-holding function of the cylinder 37 due to the shortage of the pneumatic pressure caused by the stop of electric supply, if a solenoid valve having a port that is to be closed when the electric supply is stopped is used as the opening/closing valve, the latter is closed to stop the rotation of the swing motor. Accordingly, it is possible to stop the movement of the upper blade portion ascending/descending means through the rotary shaft 63 and the link 62, and it is possible to stop the up-and-down movement of the upper blade portion.

Incidentally, since the opening/closing valve (solenoid valve) 58 is opened in the normal operation, the swing motor is operated dependently, and there is no harm against the operation of the upper blade holder 50.

Also, according to the third embodiment, it is possible to reduce the number of the guide units as the ascending/descending means by one in comparison with the conventional case.

### Embodiment 4

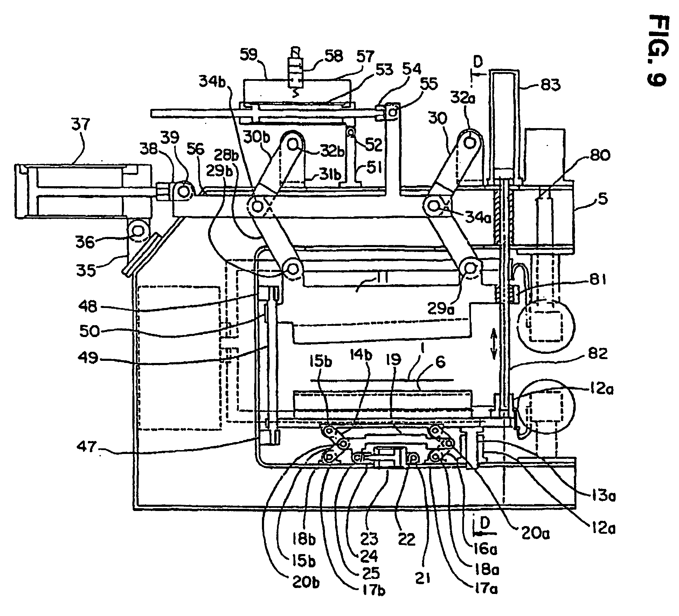

In a fourth embodiment, while improving the foregoing second embodiment (Fig. 4), in the second embodiment, at least one ascending/descending guide means out of other ascending/descending guide means than the co-use ascending/descending guide means is provided with a guide hydraulic drive means having the ascending/descending operation adjusting function, and a piston rod of the hydraulic cylinder as the guide hydraulic drive means is used as a guide shaft for the ascending/descending guide means. This will now be described with reference to Fig. 9.

In Fig. 9, a hydraulic cylinder 83 as the guide hydraulic drive means is disposed on the upper side of the carriage C frame 5 as the apparatus frame, and its piston rod 82 is passed through the carriage C frame 5 and extended to the lower blade portion side from the upper blade portion side in parallel with the abutment direction of the upper and lower blade portions.

The piston rod 82 is supported to be movable up and down by a guide member 81 within the upper blade holder 11 as the upper blade portion or a guide member 80 within the carriage C frame 5.

Then, a tip end (lower end portion) of the piston rod 82 is provided to be insertable into the guide bearing 12a provided in the lower blade portion before the cutting operation.

According to the fourth embodiment, it is possible to dispense with the guide bearing for the upper blade holder 11. Namely, prior to the start of the cutting operation, the piston rod 82 of the guide hydraulic cylinder 83 is lowered and inserted into the guide bearing 12a.

At this time, the upper blade holder 50 is bound by the guide shaft 49 of the co-use ascending/descending guide means and the piston rod 82 and maintained thereby. Incidentally, the concept to hold the position of the upper blade portion is the same as that of the first embodiment.

Also, in this fourth embodiment, the guide bearing is used in common for the ascending/descending means, the upper blade portion and the lower blade portion. Accordingly, if this is applied to the first to third embodiments, it is possible to further dispense with the ascending/descending guide means by one in each embodiment. As a result, it is possible to simplify the maintenance and adjustment work.

### Embodiment 5

A fifth embodiment relates to the improvement in the second embodiment (Fig. 4). A piston rod of a hydraulic cylinder 60 as hydraulic drive means having the ascending/descending operation adjusting function is supported movably up and down by a guide member 80 installed within the carriage C frame 5 as the apparatus frame. The other structure is the same as that of the second embodiment.

According to the fifth embodiment, it is possible to dispense with the guide bearing for the upper blade holder 11 as the upper blade portion.

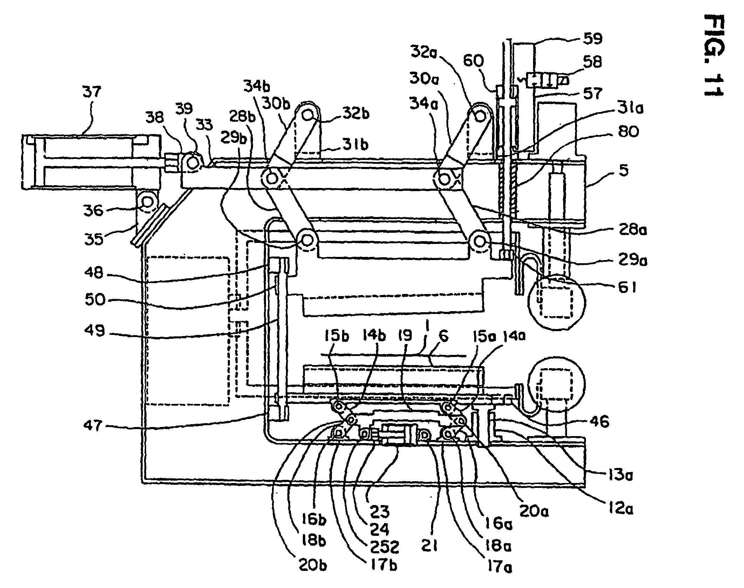

Namely, in Fig. 11, the upper blade holder 50 is guided by the piston rod of the hydraulic cylinder 60 as the hydraulic drive means for maintaining the position and the guide shaft 49 of the co-use ascending/descending guide means and may be moved up and down by the cylinder 37 as the ascending/descending drive means.

During the normal operation, the piston rod of the hydraulic cylinder 60 may be moved dependently upon the up-and-down movement of the upper blade holder 50 by magnetically exciting the solenoid valve 58 as the opening/closing valve.

However, when necessary, for example, in the case where the electric supply is interrupted due to the stop of the electric supply, the solenoid valve 58 is closed so that the hydraulic cylinder 58 does the self-holding function. As a result, the upper blade holder 50 is held in place.

### Embodiment 6

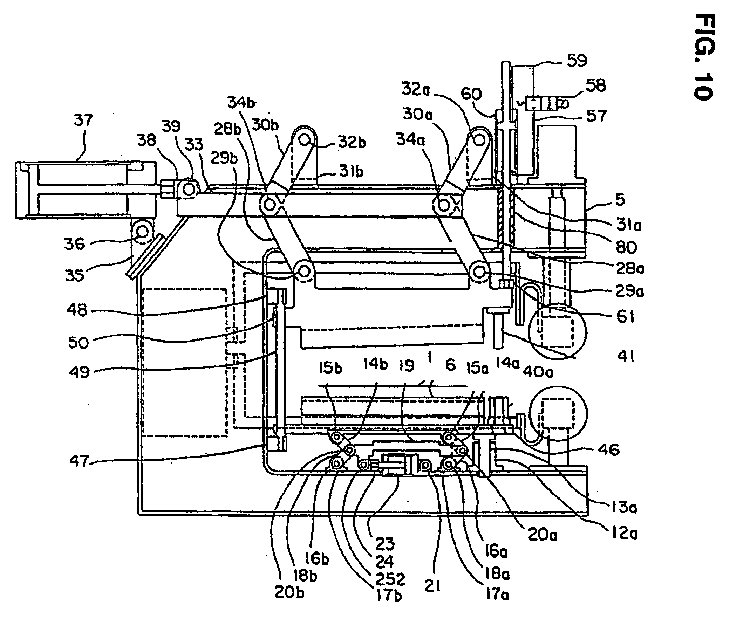

A sixth embodiment 6 is an improvement in the fifth embodiment 5 (Fig. 10). While modifying the fifth embodiment, the rigidity of the guide member 80 is enhanced, and the ascending/descending guide means for holding a clearance may be dispensed with in addition to the guide bearing for the upper blade holder.

Namely, in Fig. 11, the upper blade holder 50 as the upper blade portion is guided only by the piston rod of the hydraulic cylinder 60 as the hydraulic drive means for holding the position and the guide shaft 49 of the co-use ascending/descending guide means, and the guide bearing for setting up the clearance is dispensed with.

For this reason, in comparison with the machine structure as in the above-described fifth embodiment of Fig. 10, it is possible to reduce the parts which needs maintenance. Incidentally, the positional holding of the upper blade portion is exactly the same as that of the above-described fifth embodiment.

According to the present invention, at least one ascending descending guide means may be used in common out of the large number of ascending/descending guide means provided between the upper and lower blade portions to thereby reduce the total number of the ascending/descending guide means and to provide a cutting apparatus for a welding machine that is simple in structure and less expensive.

According to the present invention, in an apparatus using a pneumatic cylinder as the ascending/descending drive means for moving the upper blade portion up and down, the upper blade portion may be held in any desired position by using the hydraulic drive means. Accordingly, for example, it is possible to effect the emergency stop and to perform the inching operation, and in addition, it is possible to provide a cutting apparatus for a welding machine that has a high performance also with a function of a safety lock mechanism for holding the position of the upper blade portion moving upwardly.

## Claims

1. A cutting apparatus for a welding machine comprising:
a pair of upper (50) and lower blade portions (7) facing to each other;
an upper blade portion (50) ascending/descending link means (30a, 30b) for moving the upper blade portion (50) up and down to the lower blade portion (7);
a plurality of ascending/descending guide means (49) for guiding abutment between the upper (50) and lower blade portions (7);
an ascending/descending drive means (37) for ascending/descending the upper blade (50) portion through said upper blade portion ascending/descending link means (30a, 30b,62); wherein at least one of each of the upper blade portion (50) ascending/descending guide means (49), the lower blade portion (7) ascending/descending guide means (49) and the ascending/descending guide means (49) for holding a clearance between the upper (50) and lower blade portions (7) is used in common as a co-use ascending/descending means out of said plurality of ascending/descending guide means (49).
**characterized in that** the apparatus comprises
a hydraulic drive means (53,68) normally depending upon the operation of said upper blade portion (50) ascending/descending link means (30a, 30b) and working as an additional drive source for said upper blade portion (50) ascending/descending link means (30a, 30b) when necessary, in conjunction with said upper blade portion ascending/descending link means (30a, 30b,62).

2. A cutting apparatus for a welding machine comprising:
a pair of upper (50) and lower blade portions (7) facing to each other;
an upper blade portion (50) ascending/descending link means (30a, 30b) for moving the upper blade portion (50) up and down to the lower blade portion (7);
a plurality of ascending/descending guide means (49) for guiding abutment between the upper (50) and lower blade portions (7);
an ascending/descending drive means (37) for ascending/descending the upper blade (50) portion through said upper blade portion ascending/descending link means (30a, 30b, 62); wherein at least one of each of the upper blade portion (50) ascending/descending guide means (49), the lower blade portion (7) ascending/descending guide means (49) and the ascending/descending guide means (49) for holding a clearance between the upper (50) and lower blade portions (7) is used in common as a co-use ascending/descending means out of said plurality of ascending/descending guide means (49)
**characterized in that** the apparatus comprises
a hydraulic drive means (60) normally depending upon the operation of said upper blade portion (50) ascending/descending link means (30a, 30b) and working as an additional drive source for said upper blade portion (50) ascending/descending link means (30a, 30b) when necessary, in conjunction with said upper blade portion (50).

3. The cutting apparatus for a welding machine, according to claim 1, wherein said co-use ascending/descending guide means (49) engages end portions of the upper (50) and lower blade portions (7) movably up and down with a guide shaft provided in an apparatus frame so as to extend in parallel with an abutment direction of the upper (50) and lower blade portions (7).

4. The cutting apparatus for a welding machine, according to claim 2 or 3, wherein at least one ascending/descending guide means (49) other than the co-use ascending/descending guide means (82) is provided with a guide hydraulic drive means (83), and a piston rod (82) of a hydraulic cylinder as said guide hydraulic drive means (83) is used as a guide shaft.

5. The cutting apparatus for a welding machine, according to claim 1, wherein the hydraulic drive means is a hydraulic swing motor (68), and an output shaft of said swing motor is coupled detachably to the upper blade portion (50) ascending/descending link means (62).

6. The cutting apparatus for a welding machine, according to claim 5, wherein the hydraulic swing motor (68) is provided with a solenoid valve (58) for opening/dosing a hydraulic circuit of the swing motor so as to operate or stop the swing motor (68).

## Patentansprüche

1. Schneidvorrichtung für eine Schweißmaschine, wobei die Schneidvorrichtung folgendes aufweist:
ein Paar von einem oberen (50) und einem unteren Messerbereich (7), die einander zugewandt sind;
Aufwärts-/Abwärts-Gelenkeinrichtungen (30a, 30b) für den oberen Messerbereich (50), um den oberen Messerbereich (50) aufwärts und abwärts zu dem unteren Messerbereich (7) zu bewegen;
eine Vielzahl von Aufwärts-/Abwärts-Führungseinrichtungen (49), um zum Führen bis zum Anschlag zwischen dem oberen (50) und dem unteren Messerbereich (7);
eine Aufwärts-/Abwärts-Antriebseinrichtung (37), um den oberen Messerbereich (50) durch die Aufwärts-/Abwärts-Gelenkeinrichtungen (30a, 30b, 62) für den oberen Messerbereich aufwärts/abwärts zu bewegen,
wobei aus der Vielzahl von Aufwärts-/Abwärts-Führungseinrichtungen (49) mindestens eine von jeder von den Aufwärts-/Abwärts-Führungseinrichtungen (49) für den oberen Messerbereich (50), den Aufwärts-/Abwärts-Führungseinrichtungen (49) für den unteren Messerbereich (7) und den Aufwärts-/Abwärts-Führungseinrichtungen (49) zum Halten eines Zwischenraums zwischen dem oberen (50) und dem unteren Messerbereich (7) gemeinsam als eine gleichzeitig verwendete Aufwärts-/Abwärts-Einrichtung verwendet wird,
**dadurch gekennzeichnet, daß** die Vorrichtung aufweist:
eine hydraulische Antriebseinrichtung (53, 68), die normalerweise von dem Betrieb der Aufwärts-/Abwärts-Gelenkeinrichtungen (30a, 30b) für den oberen Messerbereich (50) abhängig ist und erforderlichenfalls als eine zusätzliche Antriebsquelle für die Aufwärts-/Abwärts-Gelenkeinrichtungen (30a, 30b) für den oberen Messerbereich (50) in Verbindung mit den Aufwärts-/Abwärts-Gelenkeinrichtungen (30a, 30b, 62) für den oberen Messerbereich wirksam ist.

2. Schneidvorrichtung für eine Schweißmaschine, wobei die Schneidvorrichtung folgendes aufweist:
ein Paar von einem oberen (50) und einem unteren Messerbereich (7), die einander zugewandt sind;
Aufwärts-/Abwärts-Gelenkeinrichtungen (30a, 30b) für den oberen Messerbereich (50), um den oberen Messerbereich (50) aufwärts und abwärts zu dem unteren Messerbereich (7) zu bewegen;
eine Vielzahl von Aufwärts-/Abwärts-Führungseinrichtungen (49), um zum Führen bis zum Anschlag zwischen dem oberen (50) und dem unteren Messerbereich (7);
eine Aufwärts-/Abwärts-Antriebseinrichtung (37), um den oberen Messerbereich (50) durch die Aufwärts-/Abwärts-Gelenkeinrichtungen (30a, 30b, 62) für den oberen Messerbereich aufwärts/abwärts zu bewegen,
wobei aus der Vielzahl von Aufwärts-/Abwärts-Führungseinrichtungen (49) mindestens eine von jeder von den Aufwärts-/Abwärts-Führungseinrichtungen (49) für den oberen Messerbereich (50), den Aufwärts-/Abwärts-Führungseinrichtungen (49) für den unteren Messerbereich (7) und den Aufwärts-/Abwärts-Führungseinrichtungen (49) zum Halten eines Zwischenraums zwischen dem oberen (50) und dem unteren Messerbereich (7) gemeinsam als eine gleichzeitig verwendete Aufwärts-/Abwärts-Einrichtung verwendet wird,
**dadurch gekennzeichnet, daß** die Vorrichtung aufweist:
eine hydraulische Antriebseinrichtung (60), die normalerweise von dem Betrieb der Aufwärts-/Abwärts-Gelenkeinrichtungen (30a, 30b) für den oberen Messerbereich (50) abhängig ist und erforderlichenfalls als eine zusätzliche Antriebsquelle für die Aufwärts-/Abwärts-Gelenkeinrichtungen (30a, 30b) für den oberen Messerbereich (50) in Verbindung mit dem oberen Messerbereich (50) wirksam ist.

3. Schneidvorrichtung für eine Schweißmaschine nach Anspruch 1, wobei die genannte gleichzeitig verwendete Aufwärts-/Abwärts-Führungseinrichtung (49) mit Endbereichen des oberen (50) und des unteren Messerbereichs (7) derart in Eingriff ist, daß sie mit einer in dem Vorrichtungsrahmen vorgesehenen Führungsachse auf- und abbewegbar ist, so daß sie sich parallel zu einer Anschlagrichtung des oberen (50) und des unteren Messerbereichs (7) erstreckt.

4. Schneidvorrichtung für eine Schweißmaschine nach Anspruch 2 oder 3, wobei mindestens eine Aufwärts-/Abwärts-Führungseinrichtung (49), die nicht die gleichzeitig verwendete Aufwärts-/Abwärts-Führungseinrichtung (82) ist, mit einer hydraulischen Führungsantriebseinrichtung (83) versehen ist, und eine Kolbenstange (82) eines Hydraulikzylinders als die genannte hydraulische Führungsantriebseinrichtung (83) als eine Führungsachse verwendet wird.

5. Schneidvorrichtung für eine Schweißmaschine nach Anspruch 1, wobei die hydraulische Antriebseinrichtung ein hydraulischer Schwingmotor (68) ist, und eine Ausgangswelle des Schwingmotors mit den Aufwärts-Abwärts-Gelenkeinrichtungen (62) für den oberen Messerbereich (50) lösbar gekoppelt ist.

6. Schneidvorrichtung für eine Schweißmaschine nach Anspruch 5, wobei der hydraulische Schwingmotor (68) mit einem Magnetventil (58) zum Öffnen/Schließen eines Hydraulikkreises des Schwingmotors versehen ist, um den Schwingmotor (68) zu betätigen oder anzuhalten.

## Revendications

1. Un dispositif de sécoupage pour une machine à souder, comprenant:
une paire de parties de lame supérieure (50) et inférieure (7) tournée vers l'une vers l'autre;
des moyens de liaison ascendants/descendants (30a, 30b) pour la partie de lame supérieure (50), afin de déplacer la partie de lame supérieure (50) en levée et en descente vis-à-vis de la partie de lame inférieure (7);
une pluralité de moyens de guidage montants/descendants (49), pour guider et assurer la mise en butée entre les parties de lame supérieure (50) et inférieure (7);
des moyens d'entraînement ascendants/descendants (37), pour produire un déplacement ascendant/descendant de la partie de lame supérieure (50) par l'intermédiaire desdits moyens de liaison ascendants/descendants (30a, 30b) de la partie de lame supérieure; dans lequel au moins l'un, des moyens de guidage ascendant/descendant (49) prévu pour la partie de lame supérieure (50), des moyens de guidage ascendants/descendants (49) prévus pour la partie de lame inférieure (7) et des moyens de guidage ascendants/descendants (49) prévus pour maintenir un jeu entre les parties de lame supérieure (50) et inférieure (7), est utilisé en commun à titre de moyen ascendant/descendant d'utilisation conjointe, hors de ladite pluralité de moyens de guidage ascendants/descendants (49) ;
**caractérisé en ce que** le dispositif comprend:
des moyens d'entraînement hydraulique (53, 68), dépendants normalement du fonctionnement desdits moyens de liaison ascendants/descendants (30a, 30b) de la partie de lame supérieur (50) et travaillant en tant que source d'entraînement additionnel pour lesdits moyens de liaison ascendante/descendante (30a, 30b) de la partie de lame supérieure (50) si nécessaire, en liaison avec lesdits moyens de liaison ascendants/descendants (30a, 30b, 62) pour ladite partie de lame supérieure.

2. Un dispositif de découpage pour une machine à souder comprenant:
une paire de parties de lame supérieure (50) et inférieure (7) tournée vers l'une vers l'autre;
des moyens de liaison ascendants/descendants (30a, 30b) pour la partie de lame supérieure (50), afin de déplacer la partie de lame supérieure (50) en levée et en descente vis-à-vis de la partie de lame inférieure (7);
une pluralité de moyens de guidage montants/descendants (49), pour guider et assurer la mise en butée entre les parties de lame supérieure (50) et inférieure (7);
des moyens d'entraînement ascendants/descendants (37), pour produire un déplacement ascendant/descendant de la partie de lame supérieure (50) par l'intermédiaire desdits moyens de liaison ascendants/descendants (30a, 30b) de la partie de lame supérieure; dans lequel au moins l'un, des moyens de guidage ascendant/descendant (49) prévu pour la partie de lame supérieure (50), des moyens de guidage ascendants/descendants (49) prévus pour la partie de lame inférieure (7) et des moyens de guidage ascendants/descendants (49) prévus pour maintenir un jeu entre les parties de lame supérieure (50) et inférieure (7), est utilisé en commun à titre de moyen ascendant/descendant d'utilisation conjointe, hors de ladite pluralité de moyens de guidage ascendants/descendants (49);
**caractérisé en ce que** le dispositif comprend
des moyens d'entraînement hydraulique (60), dépendant normalement du fonctionnement desdits moyens de liaison ascendants/descendants (30a, 30b) de la partie de lame supérieure (50) et travaillant en tant que source d'entraînement additionnel pour lesdits moyens de liaison ascendants/descendants (30a, 30b) de la partie de lame supérieure (50) si nécessaire, en liaison avec ladite partie de lame supérieure (50).

3. Le dispositif de découpage pour une machine à souder selon la revendication 1, dans lequel lesdits moyens de guidage ascendants/descendants (49) d'utilisation conjointe viennent en prise avec des parties d'extrémité des parties de lame supérieure (50) et inférieure (7), de façon mobile en levée et en descente, avec un arbre de guidage prévu dans un châssis de dispositif pour s'étendre parallèlement à la direction de mise en butée des parties de lame supérieure (50) et inférieure(7).

4. Le dispositif de découpage pour une machine à souder selon la revendication 2 ou 3, dans lequel au moins l'un des moyens de guidage ascendants/descendants (49), autre que les moyens de guidage ascendants/descendants (82) à utilisation conjointe, est muni de moyens d'entraînement hydrauliques de guidage (83), et une tige de piston (82) d'un cylindre hydraulique, faisant office de moyen d'entraînement hydraulique à guidage (83), est utilisée en tant qu'arbre de guidage.

5. Le dispositif de découpage pour une machine à souder selon la revendication 1, dans lequel les moyens d'entraînement hydraulique sont formés d'un moteur oscillant hydraulique (68), et un arbre de sortie dudit moteur oscillant est couplé de façon démontable aux moyens de liaison ascendants/descendants (62) de la partie de lame supérieure (50).

6. Le dispositif de découpage pour une machine à souder selon la revendication 5, dans lequel le moteur oscillant hydraulique (68) est muni d'une électrovanne (58) pour ouvrir/fermer un circuit hydraulique du moteur oscillant de façon à actionner ou à stopper le moteur oscillant (68).
